# EUROPÄISCHE PATENTANMELDUNG

(11) **EP 3 537 501 A1**
(43) Veröffentlichungstag der Anmeldung: **11.09.2019**
(21) Anmeldenummer: 19160834.8
(22) Anmeldetag: 05.03.2019
(51) Int. Cl.: H01M 2/10

(54) **AKKU-TRANSPORTVORRICHTUNG FÜR EINEN AKKUMULATOR**

(30) Priorität: 09.03.2018 DE 102018105530
(71) Anmelder: Stöbich Technology GmbH, 38644 Goslar (DE)
(72) Erfinder: Bruns, Sascha, 38855 Wernigerode (DE); Tappe, Stefan, 38704 Liebenburg (DE); Dinse, Marc, 38704 Liebenburg (DE); Krüger, Frank, 38667 Goslar (DE)
(74) Vertreter: Gramm, Lins & Partner Patent- und Rechtsanwälte PartGmbB

(57) **Zusammenfassung**

Die Erfindung betrifft eine Akku-Transportvorrichtung (10) für einen Akkumulator (22), insbesondere für einen Lithium-Akkumulator, mit (a) einer Außen-Kiste (12), die (i) einen Grundkörper (16), der eine Einfüllöffnung (20) hat, (ii) einen Deckel (18) zum luftdichten Verschließen der Einfüllöffnung (20) und (iii) eine Entlüftungsöffnung (28) aufweist, und (b) einer Innen-Wanne (14), die (i) in der Außen-Kiste (12) angeordnet ist und (ii) einen Aufnahmeraum (30) zum Aufnehmen des Akkumulators (22) umgibt. Erfindungsgemäß ist vorgesehen, dass zwischen der Außen-Kiste (12) und der Innen-Wanne (14) zumindest ein Strömungspfad (S) vom Aufnahmeraum (30) zur Entlüftungsöffnung (28) gebildet ist und entlang des Strömungspfads (S) ein Wärmeaufnahmematerial (36) angeordnet ist.

## Beschreibung

Die Erfindung betrifft eine Akku-Transportvorrichtung für einen Akkumulator, insbesondere für einen Lithium-Akkumulator, mit (a) einer Außen-Kiste, die (i) einen Grundkörper, der eine Einfüllöffnung hat, (ii) einen Deckel zum luftdichten Verschließen der Einfüllöffnung, und (iii) eine Entlüftungsöffnung aufweist, und (b) einer Innen-Wanne, die (i) in der Außen-Kiste angeordnet ist und (ii) einen Aufnahmeraum zum Aufnehmen des Akkumulators umgibt.

Eine derartige Akku-Transportvorrichtung ist in der DE 20 2014 004 436 U1 beschrieben. Derartige Akku-Transportvorrichtungen dienen zum sicheren Transport insbesondere von Lithium-Akkumulatoren. Solche Lithium-Akkumulatoren enthalten brennbare Substanzen und es besteht das Risiko, dass einzelnen Zellen der Lithium-Akkumulators kaskadierend versagen und es so zu einer Kettenreaktion kommt, bei der der Lithium-Akkumulator zerstört wird. Bei einer solchen Havarie werden große Mengen an Gasen freigesetzt. Diese Gase können giftig und/oder brennbar sein. Es muss jedoch sichergestellt sein, dass auch ein Durchgehen des Akkumulators nicht dazu führt, dass die Umgebung der Akku-Transportvorrichtung unzulässigen Gefahren ausgesetzt wird.

Da Akku-Transportvorrichtungen in großer Zahl benötigt werden, ist es zudem wünschenswert, dass diese möglichst einfach aufgebaut sind. Es ist zudem wünschenswert, dass das Nutzvolumenverhältnis, also das Verhältnis von nutzbarem Raum im Vergleich zu dem Raum, den die Akku-Transportvorrichtung einnimmt, möglichst groß ist.

Aus der WO 2016/033223 A1 ist eine gattungsgemäße Transportvorrichtung bekannt, bei der die Akkumulatoren in der Innen-Wanne angeordnet werden. Die Innenwände sind mit einem Superabsorber ausgekleidet, der mit Wasser gesättigt ist. Gehen die Lithium-Batterien durch, so nimmt diese Auskleidung Wärme auf. Die entstehenden Gase entweichen durch eine Lücke zwischen dem Grundkörper und dem Deckel. Nachteilig an einem derartigen System ist, dass die im Havariefall austretenden Gase die Umgebung schädigen können.

Eine weitere gattungsgemäße Akku-Transportvorrichtung ist aus der US2013 / 0146603 A1 bekannt. Bei dieser Akku-Transportvorrichtung sind die Außenwände des Grundkörpers mit Wärme isolierendem Material ausgekleidet. Der Deckel ist gegenüber dem Grundkörper abgedichtet und besitzt eine Gas-Reinigungsvorrichtung, sodass bei einer Havarie entstehende giftige Dämpfe durch diese Gas-Reinigungsvorrichtung gereinigt abgeführt werden können. Dieses System ist vergleichsweise aufwändig.

Aus der DE 10 2013 018 406 A1 ist eine Batterie bekannt, die ein Gehäuse besitzt, das mehrere galvanische Zellen umgibt. Zwischen den galvanischen Zellen und dem Gehäuse ist ein Pfad, entlang dem bei einer Havarie entstehende Gase abströmen können. Diese Gase strömen durch eine Austrittsöffnung aus. Vor dem austreten durch die Austrittsöffnung müssen die Gase Einbauteile zur Strömungsumlenkung und/oder Wärmeabfuhr passieren. Auf diese Weise werden Partikel zu einem gewissen Teil zurückgehalten und das austretende Gas wird gekühlt.

Der Erfindung liegt die Aufgabe zugrunde, eine vergleichsweise einfach aufgebaute und dennoch die Umwelt im Havariefall möglichst gut schützende Akku-Transportvorrichtung vorzuschlagen.

Die Erfindung löst das Problem durch eine gattungsgemäße Akku-Transportvorrichtung, bei der zwischen der Außen-Kiste und der Innen-Wanne ein Strömungspfad vom Aufnahmeraum zur Entlüftungsöffnung gebildet ist und bei der entlang des Strömungspfads ein Wärmeaufnahmematerial angeordnet ist.

Vorteilhaft an einer derartigen Akku-Transportvorrichtung ist, dass bei einer Havarie des Akkumulators entstehende heiße Gase zunächst am Wärmeaufnahmematerial entlang strömen müssen, um zur Entlüftungsöffnung zu gelangen. Beim Strömen entlang des Wärmeaufnahmematerials werden sie gekühlt. Das verringert die Wahrscheinlichkeit, dass sich die austretenden Gase entzünden oder Objekte in der Umgebung der Akku-Transportvorrichtung entzünden.

Vorteilhaft ist zudem, dass die Akku-Transportvorrichtung vergleichsweise einfach aufgebaut sein kann.

Vorteilhaft ist zudem, dass die Außenwände der Außen-Kiste als Abstrahlflächen für Wärme fungieren können, die von den heißen Gasen, die von dem Akkumulator ausgehen, beim Strömen entlang des Strömungspfads an das Wärmeaufnahmematerial abgegeben und von dort an die Außenwände geleitet wird.

Vorzugsweise verläuft zumindest einer der Strömungspfade entlang von zumindest drei Außenwänden, insbesondere entlang von vier Außenwänden der Außen-Kiste. Das führt zu einer großen Wärmeabgabefläche und kühlt die austretenden Gase.

Günstig ist es, wenn an den Außenwänden, entlang derer der Strömungspfad verläuft, plattenförmiges Wärmeaufnahmematerial angeordnet ist. Besonders günstig ist es, wenn zumindest 80%, vorzugsweise zumindest 90%, der Innenfläche der Außenseiten, entlang derer der Strömungspfad verläuft, mit plattenförmigem Wärmeaufnahmematerial verkleidet ist.

Unter dem Wärmeaufnahmematerial wird ein Material verstanden, das oberhalb einer Aktivierungstemperatur oder Wärmeaufnahme reagiert und insbesondere Wasserdampf abgibt. Vorzugsweise ist die Aktivierungstemperatur kleiner als 200 °, insbesondere kleiner als 150 °. Infrage kommt beispielsweise Gips, der zwei Aktivierungstemperaturen, nämlich bei 147 ° C und bei 131 ° C, aufweist.

Unter der Aktivierungstemperatur wird insbesondere die kleinste Temperatur verstanden, für die gilt, dass nach einer Stunde bei dieser Temperatur über 90 Masseprozent des Wärmeaufnahmematerials unter Wärmeaufnahme reagiert haben.

Günstig ist es, wenn das Wärmeaufnahmematerial oberhalb der Aktivierungstemperatur beispielsweise durch die Abgabe von Kristallwasser und/oder durch die Abspaltung von Wasser reagiert. Wasser hat eine hohe Verdampfungswärme, sodass beim Verdampfen viel Wärme aufgenommen wird. In anderen Worten kann das Wärmeaufnahmematerial mineralisch gebundenes Wasser, insbesondere Kristallwasser, und/oder adsorbiertes Wasser enthalten, wie es beispielsweise in einem Superabsorber vorliegt.

Als besonders geeignet hat sich ein Wärmeaufnahmematerial herausgestellt, dass zumindest zu 80 Gewichtsprozent aus Gips besteht. Gips hat zwei Aktivierungstemperaturen, nämlich bei 147 °C und 131 °C. Gips ist einfach zu verarbeiten, mechanisch belastbar und formstabil.

Beispielsweise handelt es sich bei dem plattenförmigen Wärmeaufnahmematerial um Gipskartonplatten. Eine Gipskartonplatte besteht aus einem gepressten Kern, der zumindest 80 Gewichtsprozent Gips enthält, und zumindest einer Lage aus zellulosehaltigem Material, die auf den Kern aufgeklebt ist .Beim Entlangströmen an dem plattenförmigen Wärmeaufnahmematerial geben die Gase Wärme an das Wärmeaufnahmematerial ab, sodass sie abkühlen.

Unter dem Merkmal, dass das Wärmeaufnahmematerial entlang des Strömungspfads angeordnet ist, wird insbesondere verstanden, dass bei einer Havarie entstehende Gase so dicht am Wärmeaufnahmematerial entlangströmen, dass sie Wärme an das Wärmeaufnahmematerial abgeben und gegebenenfalls chemisch mit dem Wärmeaufnahmematerial reagieren können.

Vorzugsweise ist entlang des Strömungspfads ein Granulat angeordnet, das Kalziumhydroxid enthält. Kalziumhydroxid reagiert mit Säuren, sodass in den bei einer Havarie entstehenden Gasen enthaltene Säuren gebunden werden.

Unter einem Strömungspfad wird diejenige Trajektorie verstanden, entlang der sich ein gedachtes Volumenelement von Gas, das bei einer Havarie entsteht, bewegen kann. Selbstverständlich existieren in der Regel sehr viele Strömungspfade. Es ist in der Regel weder möglich noch sinnvoll, alle Strömungspfade einzeln anzugeben, daher wird darauf verzichtet. Wenn mehrere Strömungspfade existieren, so ist das Wärmeaufnahmematerial vorzugsweise so angeordnet, dass zumindest 80 Gewichtsprozent, insbesondere zumindest 90 Gewichtsprozent, der bei einer Havarie entstehenden Gase am Wärmeaufnahmematerial vorbeiströmen.

Die Innen-Wanne ist vorzugsweise fluiddicht, insbesondere flüssigkeitsdicht und/oder gasdicht. Dadurch kann Gas, das bei einer Havarie entsteht, nicht durch die Wände der Innen-Wanne entweichen, sondern muss durch die Öffnung der Innen-Wanne nach oben abströmen. Es ist möglich, nicht aber notwendig, dass die Innen-Wanne einen Deckel aufweist, in diesem Fall ist ein Entweichen des Gases durch den Deckel oder zwischen Deckel und dem Rest der Innen-Wanne möglich. Die Außenkiste ist - mit Ausnahme der zumindest einen Entlüftungsöffnung - vorzugsweise fluiddicht.

Günstig ist es, wenn das Granulat ein Alkalimetallhydroxid enthält. Beispielsweise handelt es sich dabei um Natriumhydroxid und/oder Kaliumhydroxid. Es sei darauf hingewiesen, dass, wenn davon gesprochen wird, dass ein Objekt vorhanden ist, darunter grundsätzlich zu verstehen ist, dass zumindest ein entsprechendes Objekt vorhanden ist. Im vorliegenden Fall bedeutet dies, dass das Granulat zumindest ein Alkalimetallhydroxid enthält. Alkalimetallhydroxide sind hygroskopisch. Das führt dazu, dass an ihrer Oberfläche oft eine dünne wasserhaltige Schicht vorliegt. Das erleichtert die Reaktion der bei einer Havarie entstehenden Gase mit dem Alkalimetallhydroxid und gegebenenfalls dem Kalziumhydroxid, sodass schädliche Bestandteile der Gase besonders schnell und effektiv gebunden werden.

Vorzugsweise enthält das Granulat einen Indikator. Dieser Indikator ändert beispielsweise seine Farbe, wenn sich der pH-Wert um mehr als einen vorgegebenen Differenzbetrag ändert. Eine Änderung des pH-Werts deutet darauf hin, dass die Menge an Kalziumhydroxid und/oder Alkalimetallhydroxid abgenommen hat. Das würde auf die Gefahr hinweisen, dass bei einer Havarie austretende Gase möglicherweise nicht hinreichend effizient gereinigt werden können. Umgekehrt zeigt ein nicht umgeschlagener Indikator, dass mit hoher Wahrscheinlichkeit davon ausgegangen werden kann, dass bei einer Havarie entstehende Gase spezifikationsgemäß in ihrem Schadstoffgehalt reduziert werden. Das Vorhandensein des Indikators hat damit den Vorteil, dass einfach festgestellt werden kann, ob die Akku-Transportvorrichtung weiterhin die sichere Funktionsweise garantieren kann.

Günstig ist es, wenn ein Median-Partikeldurchmesser der Granulatpartikel zwischen 1,5 und 5 Millimeter beträgt. Zu kleine Granulatpartikel können dazu führen, dass der Strömungswiderstand für bei einer Havarie entstehende Gase zu groß wird. In diesem Fall kann der Innendruck im Aufnahmeraum und damit die Kraft, die auf dem Deckel lastet, zu groß werden, sodass eine gemäß einer bevorzugten Ausführungsform vorhandene Verschlussvorrichtung zum Verschließen des Deckels versagt. In diesem Fall würden potentiell gefährliche Gase ungekühlt und ungereinigt in die Umgebung entweichen können, was verhindert werden soll. Ist der Partikeldurchmesser hingegen zu groß, kann die Oberfläche, die für eine Reaktion von schädlichen Bestandteilen der Gase zur Verfügung steht, zu klein werden, sodass die Reinigungswirkung nicht garantiert ist. Es hat sich herausgestellt, dass der angegebene Median-Partikeldurchmesser zu optimalen Ergebnissen führt.

Sind die Granulatpartikel ungeformt, so wird unter dem Partikeldurchmesser der aerodynamische Durchmesser verstanden. In anderen Worten ist der Partikeldurchmesser in dem Fall der Durchmesser einer hypothetischen Kugel gleicher Masse, die in Luv 1013 hPa und 22 °C genauso schnell fällt wie der entsprechende Granulatpartikel. Sind die Granulatpartikel zylinderförmig, so wird unter dem Durchmesser das Maximum aus der Länge der Zylinder und dessen Durchmesser verstanden.

Besonders günstig ist es, wenn höchstens 20 Gewichtsprozent aller Granulatpartikel außerhalb eines Intervalls liegen, das von einem Drittel des Median-Partikel-Durchmessers bis zum dreifachen des Median-Partikeldurchmessers reicht.

Vorzugsweise sind die Granulatpartikel zylinderförmig. Hierunter wird verstanden, dass die Granulatpartikel eine zylindermantelförmige Außenstruktur haben. Es ist möglich und vorteilhaft, nicht aber notwendig, dass es sich um streng zylinderförmige Partikel handelt, das heißt, dass die Kopfflächen plan sind. Derartiges Granulat neigt besonders wenig zum Verklumpen und bildet eine Schüttung, für die die Strömungswiderstände entlang unterschiedlicher, aber gleich langer Strömungspfade nicht stark voneinander abweichen. In anderen Worten wird eine derartige Schüttung gleichmäßig durchströmt, sodass einerseits der sich im Aufnahmeraum im Fall einer Havarie aufbauende Druck klein bleibt und andererseits ausströmende Gase mit hoher Effizienz von zumindest einigen Schadstoffen zumindest teilweise gereinigt werden.

Vorzugsweise ist das Granulat porös. Beispielsweise beträgt das Porenvolumen zumindest 30%, vorzugsweise zumindest 50%, des Volumens des Granulatpartikels. Dieses Volumen wird pyknometrisch bestimmt. Beispielsweise wird ein Zylinder mit einem Durchmesser von 10 cm und einer Höhe von 30 cm vollständig mit Granulatpartikeln gefüllt und danach verschlossen. Nachfolgend wird der Behälter evakuiert und ermittelt, wieviel Gas nach dem Ende des Evakuierens in den Zylinder strömen kann, bis es zum Druckausgleich mit dem Umgebungsdruck kommt. Das Verhältnis dieses Volumens zum Innenvolumen des Zylinders stellt in guter Näherung das Porenvolumen dar.

Besonders günstig ist es, wenn das Granulat Atemkalk ist. Atemkalk ist eine Mischung aus Kalziumhydroxid und einem Alkalimetallhydroxid, beispielsweise Natriumhydroxid oder Kaliumhydroxid, die beispielsweise in Narkosegeräten verwendet wird. Es hat sich herausgestellt, dass Atemkalk sehr effizient Schadstoffe aus den Gasen, die bei einer Havarie entstehen, entfernt.

Günstig ist es, wenn im Strömungspfad hinter dem Granulat ein Aktivkohlefilter angeordnet ist. Aktivkohle kann weitere Schadstoffe aus den Gasen, die einer Havarie entstehen, entfernen. Da es im Strömungspfad hinter dem Granulat angeordnet ist, hat es eine vergleichsweise niedrige Temperatur. Die Adsorption von Schadstoffen an Aktivkohle ist umso effektiver, je geringer die Temperatur des Gases ist.

Gemäß einer bevorzugten Ausführungsform verläuft zumindest ein Strömungspfad über eine Höhendifferenz von zumindest einem Drittel, insbesondere zumindest der Hälfte, der Höhe der Außen-Kiste. Hat in anderen Worten die Außen-Kiste eine Höhe H, so verläuft zumindest einer der Strömungspfade so, dass er bei seinem Weg entlang zumindest einer der Außenwände eine Weglänge von zumindest H/3, insbesondere zumindest H/2, besonders bevorzugt zumindest 2H/3, zurücklegt. Auf diese Weise werden entstehende Gase gut gekühlt und entgiftet.

Besonders günstig ist es, wenn der Strömungspfad zumindest über einen Abschnitt abwärts verläuft, dessen Länge größer ist als ein Drittel, insbesondere zumindest die Hälfte, der Höhe der Außen-Kiste. So wird die Kühlfläche, die durch die Außenwand bereitgestellt wird, effizient ausgenutzt.

Erfindungsgemäß ist zudem ein Gebinde aus einer erfindungsgemäßen Akku-Transportvorrichtung und zumindest einem Akkumulator, insbesondere einem Lithium-Ackumulator, der in dem Aufnahmeraum der Innen-Wanne aufgenommen ist.

Im Folgenden wird die Erfindung anhand der beigefügten Zeichnungen näher erläutert. Dabei zeigt
- Figur 1: eine schematische perspektivische Ansicht eines erfindungsgemäßen Akku-Transportvorrichtung,
- Figur 2: einen Querschnitt entlang der Ebene A-A gemäß Figur 1 und
- Figur 3: einen Querschnitt entlang des Schnittes B-B gemäß Figur 1.

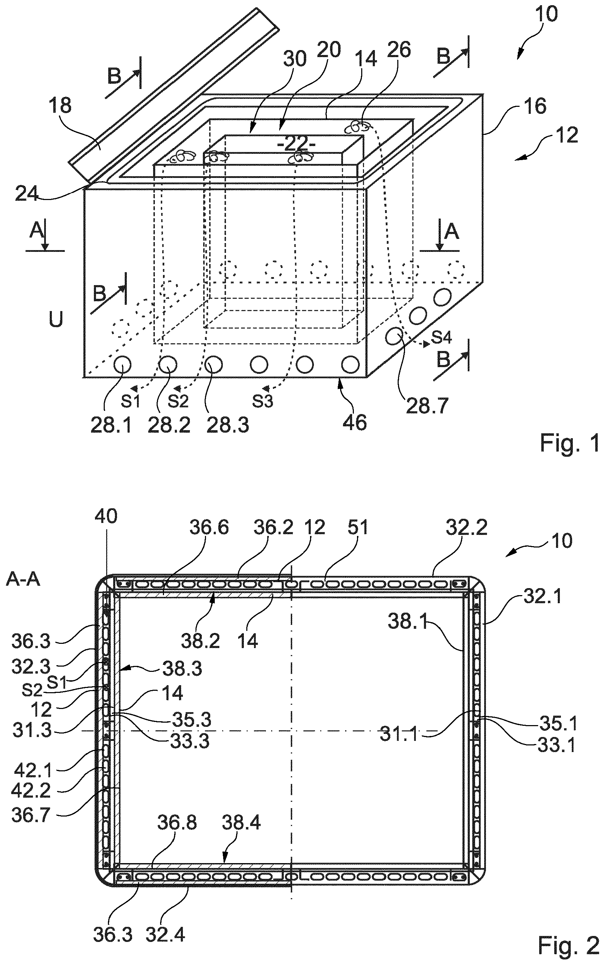

Figur 1 zeigt einen erfindungsgemäßen Akku-Transportbehälter 10, der eine Außen-Kiste 12 und eine Innen-Wanne 14 aufweist. Die Außen-Kiste 14 umfasst einen Grundkörper 16 und einen Deckel 18. Der Deckel 18 ist beispielsweise schwenkbar am Grundkörper 16 angelenkt. Es ist aber möglich, dass der Deckel 18 vollständig entnehmbar ist. Durch eine Einfüllöffnung 20 kann ein schematisch eingezeichneter Akkumulator 22 in die Außen-Kiste 12 eingesetzt werden.

Ist der Deckel 18 geschlossen, so schließt er mit dem Grundkörper 16 luftdicht ab. Dazu ist beispielsweise eine Dichtung 24 in einer Oberseite des Grundkörpers 26 und/oder dem Deckel 18 angeordnet. Kommt es zu einer Havarie des Akkumulators 22, so entstehen Gase 26. Diese können nicht zwischen Deckel und Grundkörper 16 entweichen.

Der Grundkörper 16 weist dafür Entlüftungsöffnungen 28.1, 28.2, ... auf. Das Gas 26 kann entlang eines Strömungspfads S aus einem Aufnahmeraum 30 durch die Entlüftungsöffnungen 28.1, 28.2., ... in eine Umgebung U strömen. Der Aufnahmeraum 30 ist der Raum, der von der Innen-Wanne 14 umgeben wird und in dem der Akkumulator 22 aufgenommen ist.

Figur 2 zeigt einen horizontalen Querschnitt durch die Akku-Transportvorrichtung 10. Es ist zu erkennen, dass zwischen einer Außenseite 31 der Innen-Wanne 14 und einer Innenseite 33 der Außen-Kiste 12 ein Spalt 35 gebildet ist, durch den die Strömungspfade S verlaufen. Figur 2 zeigt, dass die Strömungspfade S1, S2, ... entlang von vier Außenwänden 32.1, 32.2, 43.3, 32.4 verlaufen.

Entlang der Innenseiten der Außenwände 32.i (i = 1, 2, 3 4) sind Platten 36.1, 36.2, ... angeordnet. Im vorliegenden Fall handelt es sich bei den Platten 36 um Gipsplatten, die auf ihrer nach außen weisenden Seite und ihrer nach innen weisenden Seite mit einer Papier- oder Kartonschicht verklebt sind. Auf der nach innen weisenden Seite können die Platten aber auch unbeschichtet sein, sodass die an der Platte 36 vorbeiströmenden Gase indirekt in Kontakt mit dem Gips kommen.

Figur 2 zeigt zudem, dass die Innen-Wanne 14 Innenwannen-Außenwände 38.1, 38.2, 38.3, 38.4 aufweist. Entlang der Innenwannen-Außenwände 38.g sind ebenfalls Platten 36.5, 36.6,36.7, 36.8 aus Wärmeaufnahmematerial angeordnet. Die Strömungspfade Sj (S = 1, 2 ...) sind damit von zwei Seiten von plattenförmigem Wärmeaufnahmematerial begrenzt. Dieses Merkmal charakterisiert - unabhängig von anderen Merkmalen der Erfindung - eine bevorzugte Ausführungsform der Erfindung.

Zwischen den Innenwannen-Außenwänden 38.i und den Außenwänden 32.i ist ein Granulat 40 angeordnet, das aus einer Vielzahl von Granulatpartikeln 42.1, 42.2, ... besteht. In Figur 2 sind die Granulatpartikel alle gleich groß gezeichnet, dies ist jedoch nicht notwendig. Insbesondere ist es möglich, dass die Granulatpartikel variierende Partikeldurchmesser aufweisen. Die Granulatpartikel 42.1, 42.2, ... sind zylinderförmig und haben im vorliegenden Fall einen Durchmesser zwischen 2 und 5 Millimeter.

Im vorliegenden Fall ist das Granulat Atemkalk und besteht aus Kalziumhydroxid, Natriumhydroxid, einem Indikator sowie gegebenenfalls Hilfsstoffe. Bei dem Indikator handelt es sich beispielsweise um Ethylviolett.

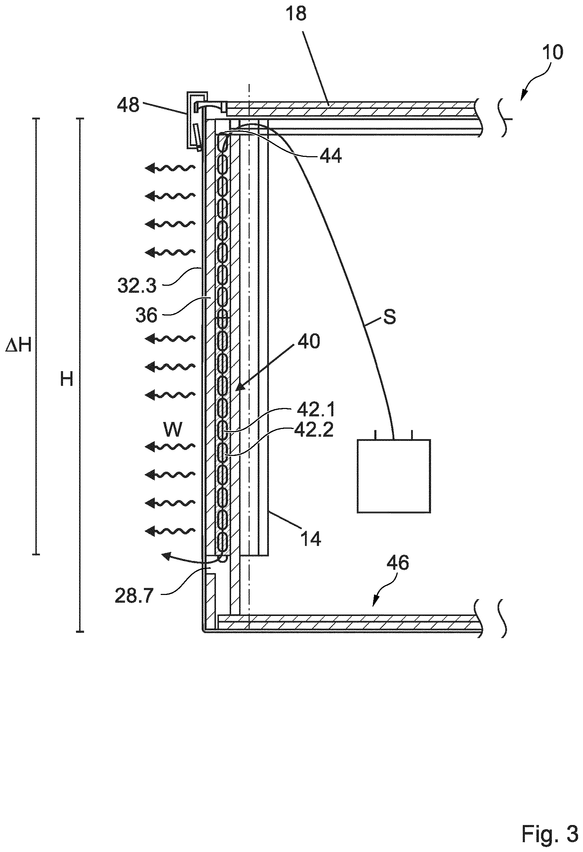

Figur 3 zeigt einen weiteren Querschnitt durch die erfindungsgemäße Akku-Transportvorrichtung 10. Es ist zu erkennen, dass die Strömungspfade S5 eine Oberkante 44 der Innen-Wanne 14 passieren und dann vom Deckel 18 weg nach unten verlaufen. Die Entlüftungsöffnungen 28.i sind benachbart zu einem Boden 46 der Akku-Transportvorrichtung 10 angeordnet. Es ist günstig und stellt eine bevorzugte Ausführungsform dar, dass die Entlüftungsöffnungen 28.i rund, insbesondere kreisrund oder oval, ausgebildet sind.

In der vorliegenden Ausführungsform haben die Platten 36.i eine Dicke zwischen 8 mm und 20 mm. Besonders günstig haben sich Dicken zwischen 11 und 14 mm herausgestellt.

Figur 3 zeigt zudem einen Verschluss 48, mittels dem der Deckel 18 in seiner Schließstellung gehalten wird. Der Verschluss 48 ist beispielsweise ein Schnappverschluss, der einen Bügel aufweist. Der Bügel ist an einem Hebel befestigt, der in seine Schließstellung einschnappt. In dieser Schließstellung greift der Bügel in einen Haken, der als Rinne ausgebildet sein kann, am Deckel 18 auf den Grundkörper 16 zu gespannt wird.

Wie Figur 3 zeigt, verläuft der Strömungspfad S über eine Höhendifferenz ΔH von zumindest einem Drittel, insbesondere zumindest der Hälfte, einer Höhe H der Außen-Kiste 12 entlang der Außenwände 32.2. Dieser Abschnitt des Strömungspfads S beginnt an der Oberkante 44 und endet an der Entlüftungsöffnung 28.7. So kann schematisch gezeigte Wärme W effektiv an die Umgebung abgegeben werden. Zudem ergibt sich ein langer Weg entlang des Wärmeaufnahmematerials 36 und/oder durch das Granulat 40. Der Strömungspfad S verläuft über einen Abschnitt abwärts, dessen Länge dem 0,8-fachen der Höhe H entspricht.

### Bezugszeichenliste

- 10: Akku-Transportvorrichtung
- 12: Außen-Kiste
- 14: Innen-Wand
- 16: Grundkörper
- 18: Deckel

- 20: Einlassöffnung
- 22: Akkumulator
- 24: Dichtung
- 26: Gas
- 28: Entlüftungsöffnung

- 30: Aufnahmeraum
- 31: Außenseite der Innen-Wanne
- 32: Außenwand
- 33: Innenseite der Außen-Kiste
- 34: Außenwand
- 35: Spalt
- 36: Platte
- 38: Innenwanne-Außenwand

- 40: Granulat
- 42: Granulatpartikel
- 44: Oberkante
- 46: Boden
- 48: Verschluss

- S: Strömungspfad
- U: Umgebung
- W: Wärme

## Patentansprüche

1. Akku-Transportvorrichtung (10) für einen Akkumulator (22), insbesondere für einen Lithium-Akkumulator, mit
(a) einer Außen-Kiste (12), die
(i) einen Grundkörper (16), der eine Einfüllöffnung (20) hat,
(ii) einen Deckel (18) zum luftdichten Verschließen der Einfüllöffnung (20) und
(iii) eine Entlüftungsöffnung (28) aufweist, und
(b) einer Innen-Wanne (14), die
(i) in der Außen-Kiste (12) angeordnet ist und
(ii) einen Aufnahmeraum (30) zum Aufnehmen des Akkumulators (22) umgibt,
**dadurch gekennzeichnet, dass**
(c) zwischen der Außen-Kiste (12) und der Innen-Wanne (14) zumindest ein Strömungspfad (S) vom Aufnahmeraum (30) zur Entlüftungsöffnung (28) gebildet ist und
(d) entlang des Strömungspfads (S) ein Wärmeaufnahmematerial (36) angeordnet ist.

2. Akku-Transportvorrichtung (10) nach Anspruch 1, **dadurch gekennzeichnet, dass**
(a) der zumindest eine Strömungspad (S) entlang von zumindest drei Außenwänden (32), insbesondere entlang von vier Außenwänden (32), der Außen-Kiste (12) verläuft und
(b) an den Außenwänden (32), entlang derer der Strömungspfad (S) verläuft, plattenförmiges Wärmeaufnahmematerial (36) angeordnet ist.

3. Akku-Transportvorrichtung (10) nach einem der vorstehenden Ansprüche, **dadurch gekennzeichnet, dass**
(a) der zumindest eine Strömungspfad (S) entlang von zumindest drei Innenwannen-Außenwänden (32) der Innen-Wanne (14) verläuft und
(b) an den Innenwannen-Außenwänden (38), entlang derer der Strömungspfad (S) verläuft, plattenförmiges Wärmeaufnahmematerial (36) angeordnet ist.

4. Akku-Transportvorrichtung (10) nach einem der vorstehenden Ansprüche, **dadurch gekennzeichnet, dass** entlang des Strömungspfads (S) ein Granulat (40) angeordnet ist, das
- Kalciumhydroxid enthält und/oder
- ein Alkalimetallhydroxid enthält.

5. Akku-Transportvorrichtung (10) nach Anspruch 3 oder 4, **dadurch gekennzeichnet, dass** das Granulat (40) einen Indikator enthält.

6. Akku-Transportvorrichtung (10) nach einem der Ansprüche 3 bis 5, **dadurch gekennzeichnet, dass** ein Median-Partikeldurchmesser der Granulatpartikel (42) zwischen 1,5 und 5 Millimeter beträgt.

7. Akku-Transportvorrichtung (10) nach einem der Ansprüche 3 bis 6, **dadurch gekennzeichnet, dass** die Granulatpartikel (42) zylinderförmig sind.

8. Akku-Transportvorrichtung (10) nach einem der Ansprüche 3 bis 7, **dadurch gekennzeichnet, dass** das Granulat (40) porös ist.

9. Akku-Transportvorrichtung (10) nach einem der Ansprüche 3 bis 8, **dadurch gekennzeichnet, dass** das Granulat (40) Atemkalk ist.

10. Akku-Transportvorrichtung (10) nach einem der vorstehenden Ansprüche, **dadurch gekennzeichnet, dass** im Strömungspfad (S) hinter dem Granulat (40) ein Aktivkohlefilter angeordnet ist.

11. Akku-Transportvorrichtung (10) nach einem der vorstehenden Ansprüche, **dadurch gekennzeichnet, dass**
zumindest ein Strömungspfad (S) über eine Höhendifferenz (ΔH) von zumindest einem Drittel, insbesondere zumindest der Hälfte, einer Höhe (H) der Außen-Kiste (12) entlang zumindest einer der Außenwände (32.1, 32.2, 32.3, 32.4) verläuft.

12. Akku-Transportvorrichtung (10) nach einem der vorstehenden Ansprüche, **dadurch gekennzeichnet, dass**
der Strömungspfad (S) zumindest über einen Abschnitt abwärts verläuft, dessen Länge größer ist als ein Drittel, insbesondere zumindest die Hälfte, der Höhe (H) der Außen-Kiste (12).
